(19)

Europäisches
Patentamt
European
Patent Office
Office européen
des brevets

(11)  **EP 4 693 885 A1**

(12)  **EUROPEAN PATENT APPLICATION**
published in accordance with Art. 153(4) EPC

(43) Date of publication:
**11.02.2026  Bulletin 2026/07**

(21) Application number: **24806672.2**

(22) Date of filing: **17.05.2024**

(51) International Patent Classification (IPC):
***H02P 21/14*** *(2016.01)*

(52) Cooperative Patent Classification (CPC):
**H02P 6/30; H02P 21/14; H02P 21/24; H02P 21/34**

(86) International application number:
**PCT/CN2024/093987**

(87) International publication number:
**WO 2024/235323 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **18.05.2023  CN 202310575344**

(71) Applicant: **CRM ICBG (WUXI) CO., LTD.
Wuxi, Jiangsu 214135 (CN)**

(72) Inventors:
• **HUA, Chun
Wuxi, Jiangsu 214135 (CN)**

• **ZHAO, Xudong
Wuxi, Jiangsu 214135 (CN)**
• **HUA, Jing
Wuxi, Jiangsu 214135 (CN)**
• **LI, Yafei
Wuxi, Jiangsu 214135 (CN)**
• **XIE, Xinghua
Wuxi, Jiangsu 214135 (CN)**

(74) Representative: **Dai, Simin
Reyda IP
A073
157, Quai du Président Roosevelt
92130 Issy-les-Moulineaux (FR)**

(54)  **FORWARD AND REVERSE ROTATION CONTROL CIRCUIT FOR SENSORLESS MOTOR,
METHOD AND MOTOR CONTROLLER**

(57)    Provided in the present application are a forward
and reverse rotation control circuit for a sensorless motor,
a method and a motor controller. According to one ex-
ample of the present application, a forward and reverse
rotation control circuit comprises: a logic controlling mod-
ule, used for providing configuration parameters and
control signals, wherein the configuration parameters
comprise a forced dragging angle increment and a forced
dragging angle initial value, and the control signals comprise a forward and reverse rotation control signal and a
selection signal; a rotor angle calculating module, used
for receiving the forced dragging angle increment and the
forced dragging angle initial value, so as to obtain a rotor
angle calculation value by accumulation; a rotor angle
estimating module, used for estimating an angle incre-
ment on the basis of voltage and current signals of a
motor, and limiting an angle increment estimated value
on the basis of the forward and reverse rotation control
signal, so as to obtain a rotor angle estimated value by
accumulation; and a selecting module, used for select-
ing, on the basis of the selection signal, to control the
motor according to the rotor angle calculation value or the
rotor angle estimated value.

| Control a motor to start under open-loop control mode, and estimate rotor angle as well as angle increment of the motor to obtain the estimated rotor angle value and estimated angle increment value | S1 |
| --- | --- |
| When a back electromotive force is detected as the motor speed increases, determine whether deviations of both the rotor angle from estimated rotor angle value and the angle increment from estimated angle increment value fall within their respective preset ranges. If the determination result is yes, control the motor with the estimated rotor angle to enter closed-loop control operation, and limit the sign of the estimated angle increment based on the forward/reverse rotation control signal to prevent change of the motor's rotation direction | S2 |

FIG. 5

EP 4 693 885 A1

**Description**

**TECHNICAL FIELD**

The present application relates to the technical field of motor vector control, and in particular to a forward and reverse rotation control circuit, method and motor controller for a sensorless motor.

**BACKGROUND**

Sensorless control method for permanent magnet synchronous motors has been widely applied in motor control systems. For sensorless control of permanent magnet synchronous motors, an open-loop asynchronous forced-dragging mode is adopted for starting at low speeds, and it switches to closed-loop control after reaching a certain rotational speed.

**SUMMARY**

The purpose of the present application is to provide a forward and reverse rotation control circuit, method and motor controller for a sensorless motor, which are used to solve problems such as poor reliability caused by changes in rotor direction in prior art.

To achieve the above and other related purposes, the present application provides a forward and reverse rotation control circuit for a sensorless motor. The forward and reverse rotation control circuit for the sensorless motor at least includes: a logic controlling module, a rotor angle calculating module, a rotor angle estimating module and a selecting module. The logic controlling module is configured to provide configuration parameters and control signals, where the configuration parameters include a forced-dragging angular increment and an initial value of the forced-dragging angle, and the control signals include a forward and reverse rotation control signal and a selection signal. The rotor angle calculating module receives the forced-dragging angular increment and the initial value of the forced-dragging angle provided by the logic controlling module, and obtains a calculated rotor angle value through accumulation. The rotor angle estimating module estimates an angular increment based on voltage signals and current signals of the motor, limits the estimated angular increment value based on the forward and reverse rotation control signal provided by the logic controlling module, and obtains an estimated rotor angle value through accumulation. The selecting module selects to control the motor according to the calculated rotor angle value output by the rotor angle calculating module or the estimated rotor angle value output by the rotor angle estimating module based on the selection signal provided by the logic controlling module.

Optionally, the rotor angle calculating module includes a first adder. The first adder is connected to an output end of the logic controlling module, and sums the forced-dragging angular increment at the current moment and the calculated rotor angle value at the previous moment to obtain the calculated rotor angle value at the current moment.

Optionally, the forward and reverse rotation control circuit for the sensorless motor further includes an alarming module, which is connected to an output end of the rotor angle estimating module and used to determine whether a well-defined forward-reverse control event occurs based on angular increments estimated by the rotor angle estimating module before and after the forward and reverse rotation control, and output an effective alarming signal in response to determining that the well-defined forward-reverse control event occurs.

More optionally, the rotor angle estimating module includes a change in angular increment estimating unit, a first increment limiting unit, a second adder, a second increment limiting unit, a forward and reverse rotation limiting unit and a third adder. The change in angular increment estimating unit estimates an intermediate change in angular increment value based on the current signal and voltage signals of the motor in a stationary two-phase reference frame. The first increment limiting unit is connected to an output end of the change in angular increment estimating unit and limits upper and lower bounds of the intermediate change in angular increment value to obtain an estimated change in angular increment value; The second adder is connected to an output end of the first increment limiting unit and sums the estimated change in angular increment value at the current moment and the estimated angular increment value at the previous moment to obtain an intermediate angular increment value at the current moment. The second increment limiting unit is connected to an output end of the second adder and directly outputs the intermediate angular increment value during open-loop control; during closed-loop control, it outputs the intermediate angular increment value after limiting. The forward and reverse rotation limiting unit is connected to an output end of the second increment limiting unit and outputs a corresponding estimated angular increment value based on the forward and reverse rotation control signal provided by the logic controlling module. The third adder is connected to an output end of the forward and reverse rotation limiting unit and sums the estimated angular increment value at the current moment and the estimated rotor angle value at the previous moment to obtain the estimated rotor angle value at the current moment.

More optionally, the change in angular increment estimating unit includes an observer, a phase-locked loop and a proportional-integral regulator; the observer receives current signal and voltage signals of the motor in a stationary two-phase reference frame and estimates the back electromotive forces of the motor; the phase-locked loop is connected to an output end of the observer and used to calculate a back electromotive force error based on the back electromotive forces output by the observer; the proportional-integral regulator is connected to an output end of the phase-locked loop and estimates the intermediate change in angular increment value based on the back electromotive force error.

The present application also provides a motor controller, which at least includes: the above forward and reverse rotation control circuit for the sensorless motor.

The present application also provides a forward and reverse rotation control method for a sensorless motor, including: controlling the motor to start in an open-loop control mode, and estimating the rotor angle and angular increment of the motor to obtain an estimated rotor angle value and an estimated angular increment value; in response to back electromotive forces being detected as the rotational speed of the motor gradually increases, determining whether the deviation between the rotor angle of the motor and the estimated rotor angle value and the deviation between the angular increment of the motor and the estimated angular increment value are both within respective preset ranges; in response to the determination result being yes, controlling the motor according to the estimated rotor angle value and entering a closed-loop control mode; and limiting the sign of the estimated angular increment value based on the forward and reverse rotation control signal to avoid a change in the rotation direction of the motor.

Optionally, in the open-loop control mode, the rotor angle of the motor at the current moment is determined by continuously accumulating a pre-configured forced-dragging angular increment to a pre-configured initial value of the forced-dragging angle; and the forward or reverse rotation of the motor is controlled based on a sign of the forced-dragging angular increment at the current moment.

More optionally, in the closed-loop control mode, the estimated rotor angle value and the estimated angular increment value are determined as follows: estimating an intermediate change in angular increment value based on the current signal and voltage signal of the motor in the stationary two-phase reference frame; limiting the upper and lower bounds of the intermediate change in angular increment value to obtain an estimated change in angular increment value; summing the estimated change in angular increment value at the current moment and the estimated angular increment value at the previous moment to obtain an intermediate angular increment value at the current moment; limiting the lower bound of the intermediate angular increment value greater than zero and limiting the upper bound of the intermediate angular increment value less than zero to obtain the limited intermediate angular increment value as the corresponding estimated angular increment value; outputting the corresponding estimated angular increment value based on the forward and reverse rotation control signal; summing the estimated angular increment value at the current moment and the estimated rotor angle value at the previous moment to obtain the estimated rotor angle value at the current moment.

More optionally, outputting the corresponding estimated angular increment value based on the forward and reverse rotation control signal includes: when the forward and reverse rotation control signal is configured to only allow rotation in a clockwise direction,

$$\Delta\hat{\theta} = \begin{cases} \Delta\hat{\theta}'''(when\Delta\hat{\theta}''' > 0) \\ 0(other) \end{cases};$$

when the forward and reverse rotation control signal is configured to only allow rotation in a counterclockwise direction,

$$\Delta\hat{\theta} = \begin{cases} \Delta\hat{\theta}''' \quad (when \ \Delta\hat{\theta}''' < 0) \\ 0 \quad (other) \end{cases};$$

where $\Delta\hat{\theta}$ is the estimated angular increment value, and $\Delta\hat{\theta}'''$ is the limited intermediate angular increment value.

More optionally, the forward and reverse rotation control method for the sensorless motor further includes: determining whether the intermediate angular increment value is equal to the estimated angular increment value; in response to the intermediate angular increment value being not equal to the estimated angular increment value, outputting an effective alarming signal.

As described above, the forward and reverse rotation control circuit, method and motor controller for the sensorless motor according to the present application have the following beneficial effects.

First, the forward and reverse rotation control circuit, method and motor controller for the sensorless motor according to the present application ensure the dynamic balance of the permanent magnet synchronous motor during operation under the closed-loop control algorithm, and at the same time improve the stability of the operation of the sensorless control motor of the permanent magnet synchronous motor, avoiding problems such as reduced reliability of the motor system and equipment damage caused by unnecessary changes in the motor direction during the rotation of the motor.

Second, the forward and reverse rotation control circuit for the sensorless motor of the present application is simple to implement, has a small footprint, and uses less software resources.

## BRIEF DESCRIPTION OF THE DRAWINGS

Figure 1 shows a schematic structural diagram of the forward and reverse rotation control circuit for the sensorless motor according to the present application.
Figure 2 shows a schematic structural diagram of the phase-locked loop and proportional-integral regulator according to the present application.
Figure 3 shows a schematic diagram of the input and output ends of the increment limiting unit according to the present application.
Figure 4 shows a schematic diagram of the input and output ends of the forward and reverse rotation limiting unit according to the present application.
Figure 5 shows a schematic flow diagram of the forward and reverse rotation control method for the sensorless motor according to the present application.

Description of reference numbers of component

| 1 | Forward and reverse rotation control circuit for sensorless motor |
| 11 | Logic controlling module |
| 12 | Rotor angle calculating module |
| 13 | Rotor angle estimating module |
| 131 | Change in angular increment estimating unit |
| 131a | Observer |
| 131b | Phase-locked loop |
| 13a | First multiplier |
| 13b | Second multiplier |
| 13c | Fourth adder |
| 13d | First filter |
| 13e | Second filter |
| 131c | Proportional-integral regulator |
| 132 | First increment limiting unit |
| 133 | Second adder |
| 134 | Second increment limiting unit |
| 135 | Forward and reverse rotation limiting unit |
| 136 | Third adder |
| 14 | Selecting module |
| 15 | Alarming module |

## DETAILED DESCRIPTION OF THE EMBODIMENTS

The following describes embodiments of the present application through specific examples. Those skilled in the art can easily understand other advantages and effects of the present application from the content disclosed in this specification. The present application can also be implemented or applied through other different specific embodiments, and various details in this specification can also be modified or changed based on different viewpoints and applications without departing from the spirit of the present application.

Sensorless control of permanent magnet synchronous motors adopts an open-loop asynchronous forced-dragging mode for starting at low speeds, and switches to closed-loop control after reaching a certain rotation speed. An observer is used to calculate d-axis and q-axis back electromotive forces. The back electromotive forces are used to construct rotation speed through PLL (Phase-Locked Loop detection) and PI (Proportional-Integral regulation), and thus generate a position signal.

During operation, due to wind or external forces, the position signal of the motor calculated via the observer, PLL, and PI calculation accumulates errors as motor operation time increases. This leads to the constructed position signal changing from forward rotation to reverse rotation or from reverse rotation to forward rotation, which destroys dynamic balance of the sensorless closed-loop control, reduces reliability of motor closed-loop control, and may even cause damage to equipment components. In some special applications, for example, for compressors that only allow high-speed rotation in one direction, reverse rotation of the rotor will affect operational reliability of the compressor; for cooling fans working in servers, when a new fan is inserted, it will cause the fan rotation direction to change, affecting availability of the server system; another example is the automotive auxiliary steering oil pump motor that needs to ensure unidirectional operation. If the rotation direction changes, it may cause equipment damage.

Generally, the problem of rotor direction change may be solved by changing the structural design. For example, adding a current detection unit to the compressor to limit the rotor direction through the consistency of the direction of the induced current and the reference current; or adding a return flow to avoid the fan rotation direction from changing, but both methods have high costs. There are also some methods that use software intervention strategies to ensure that the rotor movement direction is consistent with the normal operation direction during the motor start-up positioning process, but no effective method is proposed for the situation where the rotor rotation direction changes due to external force interference during the closed-loop operation of the motor.

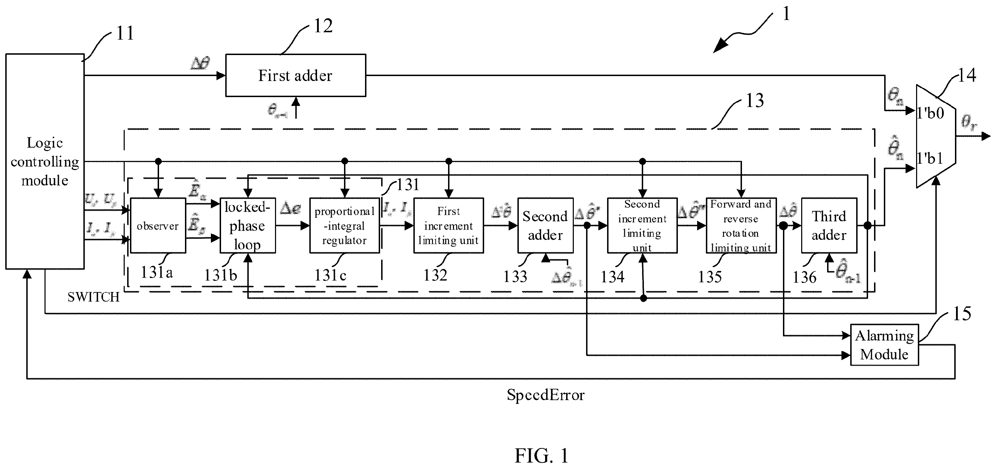

Therefore, how to effectively solve the reliability problems and avoid equipment damage caused by changes in the rotor direction has become one of the urgent problems to be solved by those skilled in the art. Please refer to Figures 1 to 5. It should be noted that the diagrams provided in these embodiments only illustrate basic concept of the present application in a schematic way, so only components related to the present application are shown in the diagrams, not drawn according to the number, shape, and size of components in actual implementation. In actual implementation, the type, number, and proportion of each component can be changed arbitrarily, and the component layout may also be more complex.

As shown in Figure 1, the present application provides a forward and reverse rotation control circuit 1 for a sensorless motor. The forward and reverse rotation control circuit 1 for the sensorless motor includes:
a logic controlling module 11, a rotor angle calculating module 12, a rotor angle estimating module 13, and a selecting module 14.

As shown in Figure 1, the logic controlling module 11 is configured to provide configuration parameters and control signals. The configuration parameters include a forced-dragging angular increment and an initial value of the forced-dragging angle, and the control signals include a forward and reverse rotation control signal and a selection signal.

In this embodiment, the logic controlling module 11 is implemented by a CPU (Central Processing Unit). The signals provided by the logic controlling module 11 include but are not limited to configuration parameters of each module and control signals (including but not limited to gating signals). The signals received by the logic controlling module 11 include but are not limited to motor feedback signals and written data, which will not be listed one by one here. In actual use, any module that can realize logic control is applicable to the present application, and is not limited to this embodiment.

As shown in Figure 1, the rotor angle calculating module 12 receives the forced-dragging angular increment $\Delta\theta$ and the initial value of the forced-dragging angle $\theta_0$ provided by the logic controlling module 11, and obtains a calculated rotor angle value $\hat{\theta}_n$ through accumulation.

In one embodiment, the rotor angle calculating module 12 includes a first adder. The first adder is connected to an output end of the logic controlling module 11, and sums the forced-dragging angular increment $\Delta\theta$ at a current moment and a calculated rotor angle value $\theta_{n-1}$ at a previous moment to obtain a calculated rotor angle value $\hat{\theta}_n$ at the current moment, which satisfies the following relationship:

$$\theta_n = \theta_{n-1} + \Delta\theta \quad (n > 0).$$

It should be noted that, as an example, the first adder only implements an addition function, and the calculated rotor angle value $\theta_{n-1}$ at the previous moment is temporarily stored through an external register; as another example, the first adder implements the functions of addition and temporary storage of the calculated rotor angle value at the previous moment.

As shown in Figure 1, the rotor angle estimating module 13 can receive the configuration parameters provided by the logic controlling module 11, and is mainly configured to: estimate an angular increment based on voltage signal and current signal of the motor, limit the estimated angular increment value $\Delta\hat{\theta}$ based on forward and reverse rotation control signal provided by the logic controlling module, and obtain an estimated rotor angle value $\hat{\theta}_n$ through accumulation.

The rotor angle estimating module 13 limits the estimated angular increment through the forward and reverse rotation control signal to obtain the estimated angular increment value $\Delta\hat{\theta}$. Specifically, when the forward and reverse rotation control signal allows forward and reverse rotation, the estimated angular increment is directly output as the estimated angular increment value $\Delta\hat{\theta}$; when the forward and reverse rotation control signal only allows clockwise rotation, the angular increment greater than zero is output as the estimated angular increment value $\Delta\hat{\theta}$; when the forward and reverse rotation control signal only allows counterclockwise rotation, the angular increment less than zero is output as the estimated angular increment value $\Delta\hat{\theta}$; thus realizing forward and reverse rotation control.

**EP 4 693 885 A1**

In this embodiment, the rotor angle estimating module 13 includes a change in angular increment estimating unit 131, a first increment limiting unit 132, a second adder 133, a second increment limiting unit 134, a forward and reverse rotation limiting unit 135, and a third adder 136.

The change in angular increment estimating unit 131 estimates an intermediate change in angular increment value $\Delta^2\hat{\theta}''$ based on the current signals $I_\alpha$, $I_\beta$, and voltage signals $U_\alpha$, $U_\beta$, of the motor in a stationary two-phase reference frame ($\alpha$-$\beta$ coordinate system), where the current signals $I_\alpha$, $I_\beta$ are sampling signals, and the voltage signals $U_\alpha$, $U_\beta$ are calculation signals. As an example, the change in angular increment estimating unit 131 includes an observer 131a, a phase-locked loop 131b, and a proportional-integral regulator 131c. The observer 131a receives the current and voltage signals in the stationary two-phase reference frame and estimates motor back electromotive forces $\hat{E}_\alpha$, $\hat{E}_\beta$. The observer 131a includes but is not limited to a sliding mode observer or a Luenberger observer. Any observer that can estimate the back electromotive force when the motor is rotating is applicable to the present application, which will not be listed one by one here.

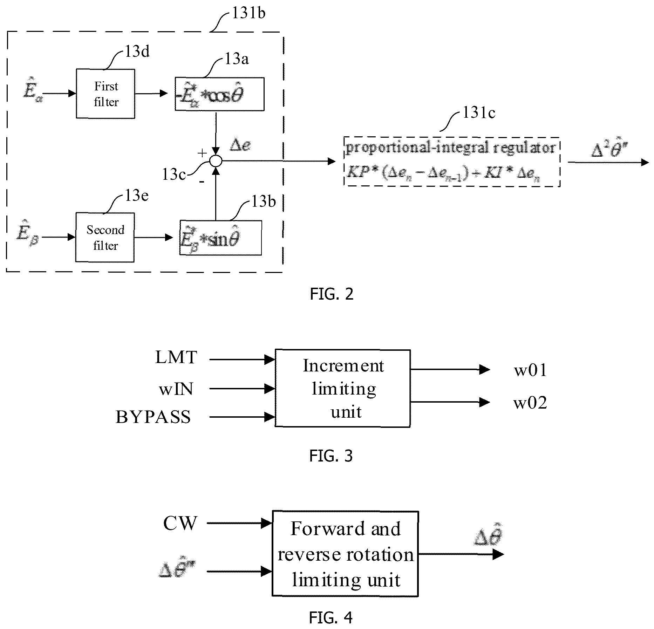

The phase-locked loop 131b is connected to an output end of the observer 131a, and calculates a back electromotive force error $\Delta e$ based on the motor back electromotive forces estimated by the observer 131a and the sine and cosine feedback signals of the estimated rotor angle value in the previous cycle. As shown in Figure 2, in this example, the phase-locked loop 131b includes a first multiplier 13a, a second multiplier 13b, and a fourth adder 13c. The first multiplier 13a multiplies the motor back electromotive force $\hat{E}\alpha$ which is inverted with the cosine feedback signal $\cos(\hat{\theta})$ of the estimated rotor angle value, the second multiplier 13b multiplies the motor back electromotive force $\hat{E}_\beta$ with the sine feedback signal $\sin(\hat{\theta})$ of the estimated rotor angle value, and the fourth adder 13c adds the output signals of the first multiplier 13a and the second multiplier 13b to obtain the estimated back electromotive force error $\Delta e$.

As another implementation of the present application, the phase-locked loop 131b further includes a first filter 13d and a second filter 13e, which are respectively connected to input ends of the first multiplier 13a and the second multiplier 13b, and perform first-order digital low-pass filtering on the input motor back electromotive forces to obtain filtered values $\hat{E}_\alpha{}^*$ and $\hat{E}_\beta{}^*$ of the motor back electromotive forces.

The proportional-integral regulator 131c is connected to an output end of the phase-locked loop 131b, and estimates the intermediate change in angular increment value $\Delta^2\hat{\theta}''$ based on the back electromotive force error $\Delta e$; in this example, the proportional-integral regulator 131c performs proportional-integral operation, which satisfies the following relationship:

$$KP*\left(\Delta e_n - \Delta e_{n-1}\right) + KI * \Delta e_n ,$$

where KP is the proportional coefficient and KI is the integral coefficient. Any circuit structure that can estimate the intermediate change in angular increment value $\Delta^2\hat{\theta}$ is applicable to the present application, and is not limited to this embodiment.

The first increment limiting unit 132 is connected to an output end of the change in angular increment estimating unit 131, and limits upper and lower bounds of the intermediate change in angular increment value $\Delta^2\hat{\theta}''$ to obtain the estimated change in angular increment value $\Delta^2\hat{\theta}$. As shown in Figure 3, as an example, the increment limiting unit includes three input ends and two output ends, where the input signal LMT is a limiting parameter configured by the logic controlling module 11 (where LMT > 0; in actual use, the absolute values of the upper and lower bounds can be set to different values), the input signal wIN is the quantity to be limited, the control end BYPASS is used to determine whether the limitation acts on the input quantity to be limited, and signals output by the output ends w01 and w02 respectively satisfy:

$$w01 = \begin{cases} wIN(when\ \ BYPASS = 1) \\ wIN(when\ \ \text{-}LMT \le wIN \le LMT) \\ LMT(when\ \ wIN > LMT) \\ -LMT(when\ \ wIN < -LMT) \end{cases} ;$$

$$w02 = \begin{cases} wIN(when\ \ BYPASS = 1) \\ wIN(when\ \ wIN \ge LMT\ \ or\ \ wIN \le -LMT) \\ LMT(when\ \ 0 < wIN < LMT) \\ -LMT(when\ \ \text{-}LMT < wIN < 0) \end{cases} ;$$

6

where, signal of the BYPASS end of the first increment limiting unit 132 is invalid, the quantity to be limited is the intermediate change in angular increment value $\Delta^2\hat{\theta}$", the output end w01 outputs the estimated change in angular increment value $\Delta^2\hat{\theta}$, and the output end w02 does not output or is not set to obtain a corresponding function.

The second adder 133 is connected to the output end of the first increment limiting unit 132, and sums the estimated change in angular increment value $\Delta^2\hat{\theta}_n$ at the current moment and the estimated angular increment value $\Delta\hat{\theta}_{n-1}$ at the previous moment to obtain the intermediate angular increment value $\Delta\hat{\theta}_n$" at the current moment, which satisfies the following relationship:

$$\Delta\hat{\theta}_n'' = \Delta\hat{\theta}_{n-1} + \Delta^2\hat{\theta}_n.$$

It should be noted that, as an example, the second adder 133 only implements an addition function, and the estimated angular increment value $\Delta\hat{\theta}_{n-1}$ at the previous moment is temporarily stored through an external register; as another example, the second adder 133 implements the functions of addition and temporary storage of the estimated angular increment value at the previous moment.

The second increment limiting unit 134 is connected to the output end of the second adder 133, and directly outputs the intermediate angular increment value during open-loop control; during closed-loop control, it limits the intermediate angular increment value, that is, a minimum speed of angle increase. As shown in Figure 3, the structure of the second increment limiting unit 134 is same as that of the first increment limiting unit 132. During open-loop control, signal of the BYPASS end of the second increment limiting unit 134 is valid; during closed-loop control, signal of the BYPASS end of the second increment limiting unit 134 is invalid. The quantity to be limited is the intermediate angular increment value $\Delta\hat{\theta}$", the limiting relationship is as described above for w02, the output end w02 outputs adjusted intermediate angular increment value $\Delta\hat{\theta}_n$"', and the output end w01 does not output or is not set to obtain a corresponding function.

It should be noted that structures of the first increment limiting unit 132 and the second increment limiting unit 134 may also be different, and corresponding structures are set according to their respective functions, which is not limited to this embodiment.

The forward and reverse rotation limiting unit 135 is connected to the output end of the second increment limiting unit 134, and outputs a corresponding estimated angular increment value $\Delta\hat{\theta}$ based on the forward and reverse rotation control signal. As shown in Figure 4, the forward and reverse rotation limiting unit 135 has two input ends and one output end, where the control end CW receives the forward and reverse rotation control signal configured by the logic controlling module 11, which is used to limit the estimated angular increment value $\Delta\hat{\theta}$ of the forward and reverse rotation directions. When the CW end is configured by the forward and reverse rotation control signal to allow forward and reverse rotation,

$$\Delta\hat{\theta} = \Delta\hat{\theta}''';$$

When the CW end is configured by the forward and reverse rotation control signal to only allow clockwise rotation,

$$\Delta\hat{\theta} = \begin{cases} \Delta\hat{\theta}''' (when \Delta\hat{\theta}''' > 0) \\ 0 (other) \end{cases};$$

When the CW end is configured by the forward and reverse rotation control signal to only allow counterclockwise rotation,

$$\Delta\hat{\theta} = \begin{cases} \Delta\hat{\theta}''' \ (when \ \Delta\hat{\theta}''' < 0) \\ 0 \ (other) \end{cases};$$

This ensures that the rotation direction of the motor does not change.

The third adder 136 is connected to the output end of the forward and reverse rotation limiting unit 135, and sums the estimated angular increment value $\Delta\hat{\theta}_n$ at the current moment and the estimated rotor angle value $\hat{\theta}_{n-1}$ at the previous moment to obtain the estimated rotor angle value $\hat{\theta}_n$ at the current moment, which satisfies the following relationship:

$$\hat{\theta}_n = \hat{\theta}_{n-1} + \Delta\hat{\theta}_n .$$

It should be noted that, as an example, the third adder 136 only implements the addition function, and the estimated rotor angle value $\hat{\theta}_{n-1}$ at the previous moment is temporarily stored through an external register; as another example, the third adder 136 implements the functions of addition and temporary storage of the estimated rotor angle value at the previous moment.

As shown in Figure 1, input ends of the selecting module 14 are respectively connected to the output ends of the rotor angle calculating module 12 and the rotor angle estimating module 13, and select the calculated rotor angle value $\hat{\theta}_n$ or the estimated rotor angle value $\hat{\theta}_n$ to control the motor based on the selection signal SWITCH provided by the logic controlling module 11.

In this embodiment, the selecting module 14 is a two-to-one multiplexer. During open-loop control, the selection signal SWITCH is at a low level, and the calculated rotor angle value $\hat{\theta}_n$ is selected and output as the rotor angle $\hat{\theta}_r$. During closed-loop control, the selection signal SWITCH is at a high level, and the estimated rotor angle value $\hat{\theta}_n$ is selected and output as the rotor angle $\hat{\theta}_r$.

As shown in Figure 1, as another implementation of the present application, the forward and reverse rotation control circuit 1 for the sensorless motor further includes an alarming module 15. The alarming module 15 is connected to the output end of the rotor angle estimating module 13, determines whether a well-defined forward-reverse control event occurs based on the angular increment estimated before and after the forward and reverse rotation control, and outputs an effective alarming signal in response to determining that the well-defined forward-reverse control event occurs.

In this embodiment, the alarming module 15 is connected to the output ends of the second adder 133 and the forward and reverse rotation limiting unit 135, and compares the output signal $\Delta\hat{\theta}_n$" of the second adder 133 with the output signal $\Delta\hat{\theta}$ of the forward and reverse rotation limiting unit 135. If $\Delta\hat{\theta}_n$"$=\Delta\hat{\theta}$, it indicates that no well-defined forward-reverse control event has occurred; if $\Delta\hat{\theta}_n$"$\neq\Delta\hat{\theta}_n$" it indicates that a well-defined forward-reverse control event has occurred (that is, an abnormal event that would cause the rotation direction of the motor to change has occurred), the alarming signal Speed Error is valid. After receiving the effective alarming signal SpeedError, the logic controlling module 11 checks the abnormal event. The abnormal events include but are not limited to external force interference and abnormal back electromotive force data, which will not be listed one by one here.

The present application also provides a motor controller, which is used to control operation of the motor and at least includes the forward and reverse rotation control circuit 1 for the sensorless motor.

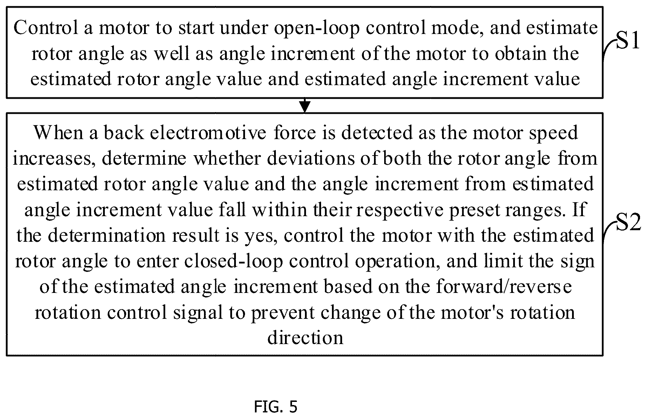

As shown in Figure 5, the present application also provides a forward and reverse rotation control method for a sensorless motor. In this embodiment, the forward and reverse rotation control method for the sensorless motor is implemented on a basis of the forward and reverse rotation control circuit 1 for the sensorless motor. In actual use, any software, hardware, or combination of software and hardware that can implement this method is applicable to the present application. The forward and reverse rotation control method for the sensorless motor includes:
S1) Controlling the motor to start in an open-loop control mode, and estimating rotor angle and angular increment of the motor to obtain an estimated rotor angle value and an estimated angular increment value. As the rotor angle increases, a rotational speed of the motor gradually increases.

In this embodiment, the motor rotor forced-dragging angular increment $\Delta\hat{\theta}$, initial forced-dragging angle value $\theta_0$ motor parameters used by the observer 131a, proportional-integral parameters (such as the proportional coefficient and integral coefficient mentioned above), parameters of the increment limiting units (such as LMT mentioned above), and parameters of the forward and reverse rotation limiting unit are written (for example, manually) into the logic controlling module 11 in advance.

When the rotational speed of the motor is in the low-speed range (where back electromotive force cannot be detected), the system adopts an open-loop mode to control the operating angle of the motor. In this mode, the logic controlling module 11 controls the selection signal SWITCH to be at a low level. At this time, the rotor angle $\theta_r$ of the motor is determined by the rotor angle calculating module 12 through continuously accumulating the forced-dragging angular increment $\Delta\theta$ to the initial forced-dragging angle value $\theta_0$ iteratively, which satisfies:

$$\theta_r = \theta_n = \theta_{n-1} + \Delta\theta .$$

At the same time, the logic controlling module 11 may control the forward and reverse rotation of the motor through the sign of each forced-dragging angular increment $\Delta\theta$. When $\Delta\theta \geq 0$, the motor rotates clockwise; when $\Delta\theta < 0$, the motor rotates counterclockwise. In this stage, the logic controlling module 11 completes the definable forward and reverse rotation motor control. As the logic controlling module 11 increases the value of $|\Delta\theta|$, the rotational speed of the motor increases.

In this mode, the selection signal SWITCH controls signal of the BYPASS end of the second increment limiting unit 134 to be valid (that is, $\Delta\hat{\theta}''' = \Delta\hat{\theta}''$) and controls the forward and reverse rotation limiting unit 135 to allow forward and reverse rotation directions (that is, $\Delta\hat{\theta} = \Delta\hat{\theta}'''$).

When the open-loop manner is adopted, the estimated rotor angle value is calculated as follows: the observer 131a estimates the motor back electromotive forces $\hat{E}_\alpha$ and $\hat{E}_\beta$ of the a axis and β axis based on the sampled current and voltages, then inputs the back electromotive forces $\hat{E}_\alpha$ and $\hat{E}_\beta$ into the phase-locked loop 131b to construct the back electromotive force error $\Delta e$. The back electromotive force error $\Delta e$ is input into the proportional-integral regulator 131c to construct the intermediate change in angular increment value $\Delta^2\hat{\theta}''$ (where $\Delta^2\hat{\theta}''$ reflects the acceleration of the motor rotor rotation to a certain extent). The intermediate change in angular increment value $\Delta^2\hat{\theta}''$ is input into the first increment limiting unit 132 to limit the estimated variable representing the motor rotor acceleration (that is, the estimated change in angular increment value $\Delta^2\hat{\theta}$) within a range of [-*LMT, LMT*] (in actual use, the absolute values of the upper and lower bounds can be set to different values). This configuration is used to reduce oscillation error of the estimated change in angular increment value caused by external factors and accelerate convergence of the rotor angle estimation channel. The estimated change in angular increment value $\Delta^2\hat{\theta}$ undergoes iterative calculation by two adders to obtain the estimated rotor angle value $\hat{\theta}$, which is used for observation by the logic controlling module 11.

S2) When the rotational speed of the motor increases to a certain extent so that the back electromotive force is detected, and it is determined whether a deviation between the rotor angle and the estimated rotor angle value, and a deviation between the angular increment and the estimated angular increment value are within corresponding preset ranges. If the determination result is yes, the motor is controlled according to the estimated rotor angle value, and the closed-loop control mode is entered; and the sign of the estimated angular increment value is limited based on the forward and reverse rotation control signal to avoid a change in the rotation direction of the motor.

When the rotational speed of the motor reaches a certain speed, the back electromotive force can be detected, and when the rotor angle approaches the estimated rotor angle value and the angular increment approaches the estimated angular increment value, the logic controlling module 11 switches the motor from the open-loop mode to the closed-loop mode. In this mode, the logic controlling module 11 controls the selection signal SWITCH to be at a high level, and at this time, the rotor angle of the motor is determined by the rotor angle estimating module 13, which satisfies:

$$\theta_r = \hat{\theta}_n .$$

In the closed-loop mode, the operation manner of the rotor angle estimating module 13 is basically the same as that in the open-loop mode. The difference is that in the closed-loop mode, signal of the BYPASS end of the second increment limiting unit 134 is invalid, and the forward and reverse rotation limiting unit 135 limits the forward and reverse rotation directions. In this embodiment, steps for the rotor angle estimating module 13 to determine the rotor angle of the motor include:

21) estimating an intermediate change in angular increment value $\Delta^2\hat{\theta}''$ based on current and voltage signals in the stationary two-phase reference frame.

22) limiting the upper and lower bounds of the intermediate change in angular increment value within a range of [-*LMT, LMT*] (for the specific relationship, please refer to the above, which will not be repeated here) to obtain the estimated change in angular increment value $\Delta^2\hat{\theta}$.

23) summing the estimated change in angular increment value $\Delta^2\hat{\theta}_n$ at the current moment and the estimated angular increment value $\Delta\hat{\theta}_{n-1}$ at the previous moment to obtain the intermediate angular increment value $\Delta\hat{\theta}_n''$ at the current moment, which satisfies:

$$\Delta\hat{\theta}_n'' = \Delta\hat{\theta}_{n-1} + \Delta^2\hat{\theta}_n .$$

24) limiting the lower bound of the intermediate angular increment value greater than zero and limiting the upper bound of the intermediate angular increment value less than zero. The intermediate angular increment value greater than zero is limited within the range of [*LMT,* +∞), and the intermediate angular increment value less than zero is limited within the range of (-∞,-*LMT*] to obtain the limited/adjusted intermediate angular increment value $\Delta\hat{\theta}'''$. For the specific relationship, please refer to the above, which will not be repeated here. In actual use, the absolute values of the upper and lower bounds can be set to different values.

25) outputting a corresponding estimated angular increment value $\Delta\hat{\theta}$ based on the forward and reverse rotation control signal.

In this step, the forward and reverse rotation control signal is configured to only allow clockwise rotation or only allow counterclockwise rotation; when configured to only allow clockwise rotation/forward rotation mode and the angular increment parameter LMT is configured, $\Delta\hat{\theta}$ will participate in the iteration in the third adder 136 with a value greater than or equal to LMT, so that the motor will not generate a reverse torque during high-speed closed-loop operation, which will cause the motor to suddenly reverse; when configured to allow only counterclockwise rotation/reverse rotation mode and the angular increment parameter LMT is configured, $\Delta\hat{\theta}$ will participate in the iteration in the third adder 136 with a value less than or equal to -LMT, so that the motor will not generate a forward torque during high-speed closed-loop operation, which will cause the motor to suddenly rotate forward, thereby controlling the stable operation of the motor. For the specific relationship, please refer to the above, which will not be repeated here.

It should be noted that values of LMTs of respective increment limiting units are set as required, which are not limited here.

26) summing the estimated angular increment value $\Delta\theta_n$ at the current moment and the estimated rotor angle value $\theta_{n-1}$ at the previous moment to obtain the estimated rotor angle value $\hat{\theta}_n$ at the current moment, which satisfies:

$$\hat{\theta}_n = \hat{\theta}_{n-1} + \Delta\hat{\theta}_n.$$

As another implementation of the present application, the forward and reverse rotation control method for the sensorless motor further includes: determining whether the intermediate angular increment value is equal to the estimated angular increment value. If they are not equal, it indicates that a well-defined forward-reverse control event has occurred, and an effective alarming signal is output.

In summary, the present application provides a forward and reverse rotation control circuit, method, and motor controller for a sensorless motor. The control circuit includes: a logic controlling module, a rotor angle calculating module, a rotor angle estimating module, and a selecting module.

The logic controlling module is configured to provide configuration parameters and control signals.

The rotor angle calculating module receives the forced-dragging angular increment and the initial value of the forced-dragging angle provided by the logic controlling module, and obtains a calculated rotor angle value through accumulation.

The rotor angle estimating module estimates the angular increment based on the voltage and current signals of the motor, limits the estimated angular increment value based on the forward and reverse rotation control signal, and obtains the estimated rotor angle value through accumulation.

The input ends of the selecting module are respectively connected to the output ends of the rotor angle calculating module and the rotor angle estimating module, and select the calculated rotor angle value or the estimated rotor angle value based on the selection signal provided by the logic controlling module to control the motor.

The forward and reverse rotation control circuit, method, and motor controller for the sensorless motor according to the present application ensure the dynamic balance of the permanent magnet synchronous motor during operation under the closed-loop control algorithm, and at the same time improve the stability of the operation of the sensorless control motor of the permanent magnet synchronous motor, avoiding problems such as reduced reliability of the motor system and equipment damage caused by unnecessary changes in the motor direction during the rotation of the motor. The forward and reverse rotation control circuit for the sensorless motor of the present application is simple to implement, occupies a small area, and uses less software resources. Therefore, the present application effectively overcomes various shortcomings in the prior art and has high industrial utilization value.

The above embodiments are only illustrative of the principles and effects of the present application, and are not intended to limit the present application. Any person familiar with this technology can modify or change the above embodiments without departing from the spirit and scope of the present application. Therefore, all equivalent modifications or changes made by those with ordinary knowledge in the art without departing from the spirit and technical ideas disclosed in the present application should still be covered by the claims of the present application.

**Claims**

1. A forward and reverse rotation control circuit for a sensorless motor, comprising:

   a logic controlling module configured to provide configuration parameters and control signals, wherein the configuration parameters comprise a forced-dragging angular increment and an initial value of the forced-dragging angle, and the control signals comprise a forward and reverse rotation control signal and a selection signal;
   a rotor angle calculating module configured to receive the forced-dragging angular increment and the initial value of the forced-dragging angle provided by the logic controlling module, and obtain a calculated rotor angle value through accumulation;

a rotor angle estimating module configured to estimate an angular increment based on voltage signals and current signals of the motor, limit an estimated angular increment value based on the forward and reverse rotation control signal provided by the logic controlling module, and obtain an estimated rotor angle value through accumulation; and

a selecting module configured to select to control the motor according to the calculated rotor angle value output by the rotor angle calculating module or the estimated rotor angle value output by the rotor angle estimating module based on the selection signal provided by the logic controlling module.

2. The forward and reverse rotation control circuit according to claim 1, wherein the rotor angle calculating module comprises a first adder;

the first adder is connected to an output end of the logic controlling module, and sums a forced-dragging angular increment at a current moment and a calculated rotor angle value at a previous moment to obtain a calculated rotor angle value at the current moment.

3. The forward and reverse rotation control circuit according to claim 1 or 2, further comprising an alarming module connected to an output end of the rotor angle estimating module and configured to:

determine whether a well-defined forward-reverse control event occurs based on angular increments estimated by the rotor angle estimating module before and after forward and reverse rotation control; and

output an effective alarming signal in response to determining that the well-defined forward-reverse control event occurs.

4. The forward and reverse rotation control circuit according to any one of claims 1 to 3, wherein the rotor angle estimating module comprises:

a change in angular increment estimating unit configured to estimate an intermediate change in angular increment value based on the current signals and the voltage signals of the motor in a stationary two-phase reference frame;

a first increment limiting unit connected to an output end of the change in angular increment estimating unit and configured to limit upper and lower bounds of the intermediate change in angular increment value to obtain an estimated change in angular increment value;

a second adder connected to an output end of the first increment limiting unit and configured to sum an estimated change in angular increment value at a current moment and an estimated angular increment value at a previous moment to obtain an intermediate angular increment value at the current moment;

a second increment limiting unit connected to an output end of the second adder and configured to directly output the intermediate angular increment value during open-loop control and output the intermediate angular increment value after limiting during closed-loop control;

a forward and reverse rotation limiting unit connected to an output end of the second increment limiting unit and configured to output a corresponding estimated angular increment value based on the forward and reverse rotation control signal;

a third adder connected to an output end of the forward and reverse rotation limiting unit and configured to sum an estimated angular increment value at the current moment and an estimated rotor angle value at the previous moment to obtain the estimated rotor angle value at the current moment.

5. The forward and reverse rotation control circuit according to claim 4, wherein the change in angular increment estimating unit comprises:

an observer configured to receive the current signals and the voltage signals of the motor in the stationary two-phase reference frame and estimate back electromotive forces of the motor;

a phase-locked loop connected to an output end of the observer and configured to calculate a back electromotive force error based on the back electromotive forces output by the observer; and

a proportional-integral regulator connected to an output end of the phase-locked loop and configured to estimate the intermediate change in angular increment value based on the back electromotive force error.

6. A motor controller, comprising: the forward and reverse rotation control circuit according to any one of claims 1 to 5.

7. A forward and reverse rotation control method for a sensorless motor, comprising:

controlling the motor to start in an open-loop control mode, and estimating a rotor angle and an angular increment of the motor to obtain an estimated rotor angle value and an estimated angular increment value;

in response to back electromotive forces being detected as a rotational speed of the motor gradually increases, determining whether a deviation between the rotor angle of the motor and the estimated rotor angle value and a deviation between an angular increment of the motor and the estimated angular increment value are within respective preset ranges;

in response to the determination results being yes, controlling the motor according to the estimated rotor angle value, entering a closed-loop control mode, and limiting a sign of the estimated angular increment value based on a forward and reverse rotation control signal to avoid a change in a rotation direction of the motor.

8. The forward and reverse rotation control method according to claim 7, wherein in the open-loop control mode,

determining the rotor angle of the motor at a current moment by continuously accumulating a pre-configured forced-dragging angular increment to a pre-configured initial value of the forced-dragging angle; and

controlling the forward or reverse rotation of the motor based on a sign of the forced-dragging angular increment at the current moment.

9. The forward and reverse rotation control method according to claim 7 or 8, wherein in the closed-loop control mode, the estimated rotor angle value and the estimated angular increment value are determined as follows:

estimating an intermediate change in angular increment value based on current signals and voltage signals of the motor in a stationary two-phase reference frame;

limiting upper and lower bounds of the intermediate change in angular increment value to obtain an estimated change in angular increment value;

summing an estimated change in angular increment value at the current moment and an estimated angular increment value at a previous moment to obtain an intermediate angular increment value at the current moment;

obtaining a limited intermediate angular increment value as a corresponding estimated angular increment value by limiting a lower bound of the intermediate angular increment value greater than zero and limiting an upper bound of the intermediate angular increment value less than zero;

outputting the corresponding estimated angular increment value based on the forward and reverse rotation control signal;

summing the estimated angular increment value at the current moment and the estimated rotor angle value at the previous moment to obtain the estimated rotor angle value at the current moment.

10. The forward and reverse rotation control method according to claim 9, wherein outputting the corresponding estimated angular increment value based on the forward and reverse rotation control signal comprises:

when the forward and reverse rotation control signal is configured to only allow rotation in a clockwise direction,

$$\Delta\hat{\theta} = \begin{cases} \Delta\hat{\theta}''' (when \Delta\hat{\theta}''' > 0) \\ 0 (other) \end{cases};$$

when the forward and reverse rotation control signal is configured to only allow rotation in a counterclockwise direction,

$$\Delta\hat{\theta} = \begin{cases} \Delta\hat{\theta}''' \quad (when \quad \Delta\hat{\theta}''' < 0) \\ 0 \quad (other) \end{cases};$$

wherein $\Delta\hat{\theta}$ is the estimated angular increment value, and $\Delta\theta'''$ is the limited intermediate angular increment value.

11. The forward and reverse rotation control method according to claim 9, further comprising:

determining whether the intermediate angular increment value is equal to the estimated angular increment value;

in response to the intermediate angular increment value being not equal to the estimated angular increment value, outputting an effective alarming signal.

FIG. 1

FIG. 2

FIG. 3

FIG. 4

Control a motor to start under open-loop control mode, and estimate rotor angle as well as angle increment of the motor to obtain the estimated rotor angle value and estimated angle increment value /S1

When a back electromotive force is detected as the motor speed increases, determine whether deviations of both the rotor angle from estimated rotor angle value and the angle increment from estimated angle increment value fall within their respective preset ranges. If the determination result is yes, control the motor with the estimated rotor angle to enter closed-loop control operation, and limit the sign of the estimated angle increment based on the forward/reverse rotation control signal to prevent change of the motor's rotation direction /S2

FIG. 5

## INTERNATIONAL SEARCH REPORT

| International application No. |
| --- |
| **PCT/CN2024/093987** |

| A. | CLASSIFICATION OF SUBJECT MATTER |
| --- | --- |
| | H02P 21/14(2016.01)i |

According to International Patent Classification (IPC) or to both national classification and IPC

| B. | FIELDS SEARCHED |
| --- | --- |

Minimum documentation searched (classification system followed by classification symbols)

IPC: H02P

Documentation searched other than minimum documentation to the extent that such documents are included in the fields searched

Electronic data base consulted during the international search (name of data base and, where practicable, search terms used)

CNTXT: ENTXT; ENTXTC; DWPI; WPABS; CNKI: 无, 传感器, 转子, 角度, 位置, 估测, 启动, 开环, 闭环, 正转, 反转, sensorless, rotor, angle, position, calculat+, estimat+, starting, open loop, closed loop, forward, reverse

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 115700992 A (HEFEI GEYI INTEGRATED CIRCUIT CO., LTD. et al.) 07 February 2023 (2023-02-07) <br> description, paragraphs 31-68, and figures 1-6 | 1-3, 6-8 |
| A | CN 115700992 A (HEFEI GEYI INTEGRATED CIRCUIT CO., LTD. et al.) 07 February 2023 (2023-02-07) <br> entire document | 4-5, 9-11 |
| Y | CN 114629385 A (SHANDONG SIASUN INDUSTRIAL SOFTWARE RESEARCH INSTITUTE CO., LTD.) 14 June 2022 (2022-06-14) <br> description, paragraphs 46-49, and figure 5 | 1-3, 6-8 |
| A | CN 114629385 A (SHANDONG SIASUN INDUSTRIAL SOFTWARE RESEARCH INSTITUTE CO., LTD.) 14 June 2022 (2022-06-14) <br> entire document | 4-5, 9-11 |
| Y | CN 109194228 A (SHI LEI) 11 January 2019 (2019-01-11) <br> description, paragraphs 5-112, and figures 1-3 | 1-3, 6-8 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 July 2024** | **26 July 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/093987**

## C.    DOCUMENTS CONSIDERED TO BE RELEVANT

| Category* | Citation of document, with indication, where appropriate, of the relevant passages | Relevant to claim No. |
|---|---|---|
| A | CN 108418480 A (SUZHOU PARTTON ELECTRONICS CO., LTD.) 17 August 2018 (2018-08-17)<br>      entire document | 1-11 |
| A | CN 114542441 A (HANGZHOU SILAN MICROELECTRONICS CO., LTD.) 27 May 2022 (2022-05-27)<br>      entire document | 1-11 |
| A | KR 100848155 B1 (SAMSUNG ELECTRONICS CO., LTD.) 23 July 2008 (2008-07-23)<br>      entire document | 1-11 |

Form PCT/ISA/210 (second sheet) (July 2022)

## INTERNATIONAL SEARCH REPORT
### Information on patent family members

International application No.

**PCT/CN2024/093987**

| Patent document cited in search report | | | Publication date (day/month/year) | Patent family member(s) | Publication date (day/month/year) |
|---|---|---|---|---|---|
| CN | 115700992 | A | 07 February 2023 | None | |
| CN | 114629385 | A | 14 June 2022 | None | |
| CN | 109194228 | A | 11 January 2019 | None | |
| CN | 108418480 | A | 17 August 2018 | None | |
| CN | 114542441 | A | 27 May 2022 | None | |
| KR | 100848155 | B1 | 23 July 2008 | None | |

Form PCT/ISA/210 (patent family annex) (July 2022)